(19) **Europäisches Patentamt / European Patent Office / Office européen des brevets**

(11) **EP 1 602 062 B1**

(12) **EUROPEAN PATENT SPECIFICATION**

(45) Date of publication and mention
of the grant of the patent:
**02.04.2008 Bulletin 2008/14**

(51) Int Cl.:
***G06K 9/00*** (2006.01)

(21) Application number: **04710570.5**

(86) International application number:
**PCT/SE2004/000182**

(22) Date of filing: **12.02.2004**

(87) International publication number:
**WO 2004/074978 (02.09.2004 Gazette 2004/36)**

(54) **METHODS, COMPUTER PROGRAM PRODUCTS AND DEVICES FOR CHECK OF IDENTITY**

VERFAHREN, COMPUTERPROGRAMMPRODUKTE UND VORRICHTUNG ZUR ÜBERPRÜFUNG DER IDENTITÄT

PROCEDES, PRODUITS-PROGRAMMES INFORMATIQUES ET DISPOSITIFS DE VERIFICATION D'IDENTITE

(84) Designated Contracting States:
**AT BE BG CH CY CZ DE DK EE ES FI FR GB GR HU IE IT LI LU MC NL PT RO SE SI SK TR**

(30) Priority: **24.02.2003 SE 0300478**
**24.02.2003 US 448891 P**

(43) Date of publication of application:
**07.12.2005 Bulletin 2005/49**

(73) Proprietor: **Precise Biometrics AB**
**223 70 Lund (SE)**

(72) Inventor: **NORDIN, Björn**
**S-223 73 Lund (SE)**

(74) Representative: **Andersson, Björn E.**
**Awapatent AB,**
**P.O. Box 5117**
**200 71 Malmö (SE)**

(56) References cited:
**EP-A2- 0 300 167          EP-A2- 0 862 131**
**WO-A1-01/84494          US-A- 4 135 147**
**US-A- 4 646 352          US-A- 5 631 972**
**US-B1- 6 185 318**

• JIANG, X., YAU, W.-Y.: "Fingerprint Minutiae Matching Based on the Local and Global Structures" PROC. INTL. CONF. ON PATTERN RECOGNITION, 3 September 2000 (2000-09-03), - 7 September 2000 (2000-09-07) pages 1038-1041, XP010533991

• GERMAIN, R. S., CALIFANO, A., COLVILLE, S.: "Fingerprint matching using transformation parameter clustering" IEEE COMPUTATIONAL SCIENCE & ENGINEERING, October 1997 (1997-10), pages 42-49, XP002361694

**Description**

Field of the Invention

The present invention relates to methods, computer program products and devices for creating a representation of a fingerprint, for use in checking a person's identity and for creating reference data for checking a person's identity.

Background Art

It is known to identify in a fingerprint what is referred to as minutiae points, and identify or verify a person's identity using a plurality of such minutiae points' location, type and orientation in the fingerprint. In a first recording of a person's fingerprint a template is created, which constitutes reference data that is associated with the person's identity. This process is usually referred to as enrolment. The template can be stored electronically, either in a database of a plurality of people's identity, or on a data carrier, such as a smart card, carried by the person. A recorded fingerprint is frequently stored and processed as an image file, which is usually preprocessed, for example, by binarisation before it can be used. When a person's identity is to be verified or determined, an image of the person's fingerprint is recorded in a prior-art manner, usually by means of a silicon sensor. The image recorded is here referred to as "current fingerprint".

In a "verification" of the person's identity, a current fingerprint is compared with a template, for the purpose of deciding whether the person having the current fingerprint is the person she pretends to be, i.e. the person with whom the smart card is associated.

In an "identification" of a person's identity, a current fingerprint is compared with a plurality of templates which are usually stored in a database.

In the following the expression "checking a person's identity" will be used to comprise both identification and verification.

Several techniques of representing fingerprints electronically are known. The above-described image file can be processed for identification of minutiae points. It is known to use minutiae points, the location and orientation of which in a person's fingerprint constitute unique features of the person. It is also known to identify minutiae points and to determine their type, location and orientation in a coordinate system. In a verification or identification, the minutiae points of a current fingerprint can be compared with minutiae points from one or more templates.

A variant of this method comprises selecting a reference minutiae point and representing the remaining minutiae points in relation to this reference point. This can make it easier to handle a situation where the orientation of the current fingerprint differs from the orientation of the template.

US-4,135,147 discloses a method where a minutiae point is described in relation to minutiae neighbourhoods. In the method according to US-4,135,147 a vector is created, which describes each minutiae point in terms of distance and angles in relation to the minutiae neighbourhoods. A template consisting of a plurality of such vectors can, in an identity check, be compared with a plurality of vectors which represent an unknown fingerprint. Since each minutiae point is described in relation to minutiae neighbourhoods, each such vector will contain a relative large amount of information which need be compared when checking a person's identity.

In a fingerprint 25-30 minutiae points are often found, sometimes up to 200. In the cases where a reference minutiae point is used, this is in most cases arbitrarily selected in the template. This may imply that all points in a current fingerprint must be tested as reference minutiae point, pairs of minutiae points being formed with each of all the other points, for the purpose of finding a match.

This method of representing fingerprints, however, requires a relatively large storage space, which is disadvantageous if it is desirable to store the fingerprint on a carrier with a limited storage space, such as a smart card.

Besides, the comparisons that must be made between a current fingerprint and a template are fairly complicated and take a long time. Thus, they are also less suitable for use in methods for checking a person's identity, in which a current fingerprint is to be compared with a large number of alternative previously recorded fingerprints.

Xudong Jiang et al., 'Fingerprint Minutiae Matching Based on the Local and Global Structures', Proc. Intl Conf. on Pattern Recognition, pp. 1038-1041, 2000 IEEE, discloses a minutiae matching technique using local and global structures of minutiae, wherein the local structure comprises distances, angles, orientations, ridge counts, minutiae types for a triplet of minutiae points. The global structure further comprises rotation and translation information.

Robert S. Germain et al., 'Fingerprint Matching Using Transformation Parameter Clustering', IEEE Comutational Science and Engineering, pp. 42-49, 1997 IEEE, discloses a similarity-searching algorithm using a higher dimensional indexing scheme by adding invariant properties of feature subset to the index. A triplet of minutiae points is considered, which can be assigned a geometry of an ordered triangle. The index consist of nine components: length of each side, ridge count between each pair, and angles measured with respect to the fiducial side.

Summary of the Invention

An object of the present invention is to wholly or partly eliminate problems associated with prior art. Other objects will be evident from the following description.

The object is wholly or partly achieved by a method, a device and a computer program product according to the independent claims. Embodiments of the invention are defined by the dependent claims and by the following description.

According to a first aspect, a method is provided for creating a representation of a fingerprint. The method comprises creating unique pairs of minutiae points identified in the fingerprint, each unique pair of minutiae points being represented by a distance between said minutiae points and by angles associated with the respective minutias points included in the pair.

By "unique pair" is meant that two minutiae points included in the pair appears as a pair only once.

The method makes it possible to provide a compact storage format for biometric data. This storage space allows a quick comparison between reference data and corresponding data from a current fingerprint.

The angles can represent the orientation of the respective minutiae points, and an embodiment of the invention is characterised in that the unique pairs of minutiae points are only represented by a distance and two angles.

According to another embodiment of the invention, the pair can also be represented by data indicating the type of the respective minutiae points. Examples of types are ridge endings or ridge bifurcations. Also other types are conceivable.

According to one embodiment, the angles are represented relative to a straight line extending through both minutiae points included in the pair. This adds to making the representation independent of the orientation of the fingerprint since each pair of minutiae points are related to each other and do not have to be adjusted according to a predetermined coordinate system.

According to an alternative embodiment, the angles can, however, be represented relative to a predetermined coordinate system.

According to one embodiment, the fingerprint is represented by a set of unique pairs of minutiae points. A set of unique pairs relates to a data structure, i.e. a vector or matrix, which represents all unique pairs of minutiae points associated with a fingerprint.

According to one embodiment, such a set can be represented as a data structure, which is indexed based on the angles associated with the respective minutiae points included in the pair. For instance, the distance between the minutiae points included in a pair can be arranged in the data structure, indexed based on the angles. Thus a two-dimensional matrix structure, or the like, can be obtained, which in each cell contains a distance value. Each cell can be uniquely pointed out by letting the angles associated with the minutiae points constitute the index.

This results in a data structure which is two-dimensionally indexed, a first dimension being indexed based on a first angle, which is associated with a first minutiae point included in said pair of minutiae points, and a second dimension being indexed based on a second angle, which is associated with a second minutiae point included in said pair of minutiae points.

According to a second aspect of the invention, a method is provided for use in checking a person's identity. The method comprises identifying in an electronic representation of a fingerprint first and second minutiae points, determining said distance between said first and second minutiae points, and determining first and second angles associated with said first and second minutiae points. The method further comprises one of the steps described above.

According to a third aspect, a device is provided for use in checking a person's identity, comprising a data processing unit. The device is characterised in that said data processing unit is arranged to create unique pairs of minutiae points identified in the fingerprint, each unique pair of minutiae points being represented by a distance between said minutiae points and by angles associated with the respective minutiae points included in the pair. Such a device can be a fingerprint reader, in which a fingerprint is processed according to the method.

According to a fourth aspect, a device is provided for use in checking a person's identity, comprising a data processing unit. The device is characterised in that said data processing unit is arranged to compare a representation of a current fingerprint with reference fingerprint data, said representation of a current fingerprint comprising unique pairs of minutiae points identified in the current fingerprint, and said reference fingerprint data comprising unique pairs of minutiae points identified in a reference fingerprint, each unique pair of minutiae points being represented by a distance between said minutiae points and by angles associated with the respective minutiae points included in the pair. Such a device can be a smart card, on which a comparison is made between a current fingerprint and reference fingerprint data.

According to a fifth aspect, a method is provided for creating reference data for checking a person's identity. The method comprises identifying in an electronic representation of a fingerprint first and second minutiae points, determining a distance between said first and second minutiae points, and determining first and second angles associated with said first and second minutiae points. The method further comprises steps according to the method described above.

According to additional aspects of the invention, the methods can be implemented in the form of computer program products or in the form of application specific integrated circuits (ASIC), which have been adapted to perform the method.

<u>Brief Description of the Drawings</u>

The invention will now be described with reference to the accompanying schematic drawings, which illustrate non-limiting examples of embodiments of the invention.

Fig. 1 is a schematic image of part of a fingerprint, in which a plurality of minutiae points have been identified.

Fig. 2 illustrates schematically the minutiae points in Fig. 1, when extracted from the image.

Fig. 3a is a schematic image of three minutiae points.

Fig. 3b is a schematic image of a pair of minutiae points.

Fig. 4 is a schematic flow chart of a first method according to the invention.

Fig. 5 is a schematic flow chart of a second method according to the invention.

Fig. 6 is a schematic block diagram which shows a device according to one aspect of the invention.

<u>Description of Embodiments</u>

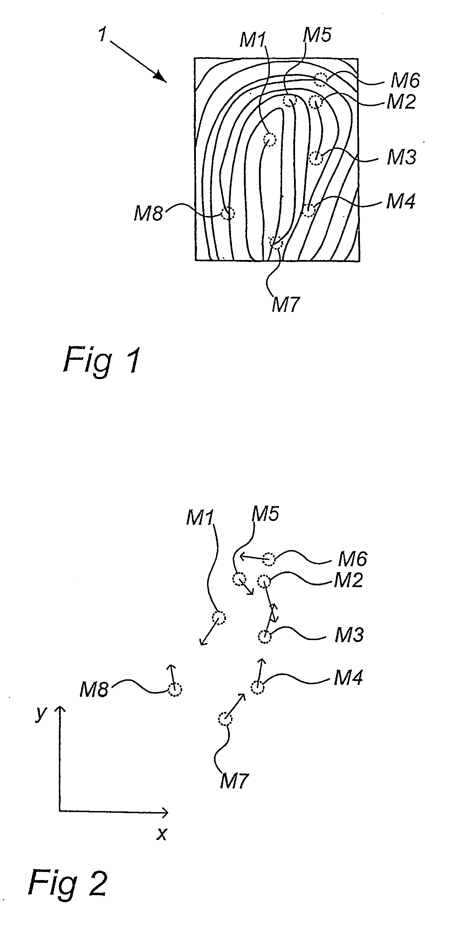

With reference to Fig. 1, a schematic image of part of a fingerprint 1 is shown, in which a plurality of minutiae points M1-M8 have been identified in a prior-art manner, for the purpose of illustration marked with dotted rings. The marked minutiae points M1-M8 are of the type endings M1-M5 and bifurcations M6-M8. Also other types of minutiae points may occur and are processed analogously.

Fig. 2 illustrates schematically how the minutiae points identified in Fig. 1 have been extracted in a prior-art manner from the image and arranged according to a coordinate system. For each minutiae point, a directional vector has been identified in a prior-art manner. Table 1 shows a non-limiting example of how the eight points can be represented and stored by indicating for each point a directional vector, an x coordinate, a y coordinate and a type, i.e. ending ("E") or bifurcation ("B").

Table 1: Data for minutiae points from Fig. 1

| Point | Direction | x coord | y coord | Type |
|-------|-----------|---------|---------|------|
| M1 | $\theta1$ | X1 | Y1 | E |
| M2 | $\theta2$ | X2 | Y2 | E |
| M3 | $\theta3$ | X3 | Y3 | E |
| M4 | $\theta4$ | X4 | Y4 | E |
| M5 | $\theta5$ | X5 | Y5 | E |
| M6 | $\theta6$ | X6 | Y6 | B |
| M7 | $\theta7$ | X7 | Y7 | B |
| M8 | $\theta8$ | X8 | Y8 | B |

It will be appreciated that from these n minutiae points, $\sum_{i=1}^{n-1} i$ different pairs of minutiae points can be created.

Thus, 28 different pairs of minutiae points can be created from 8 points.

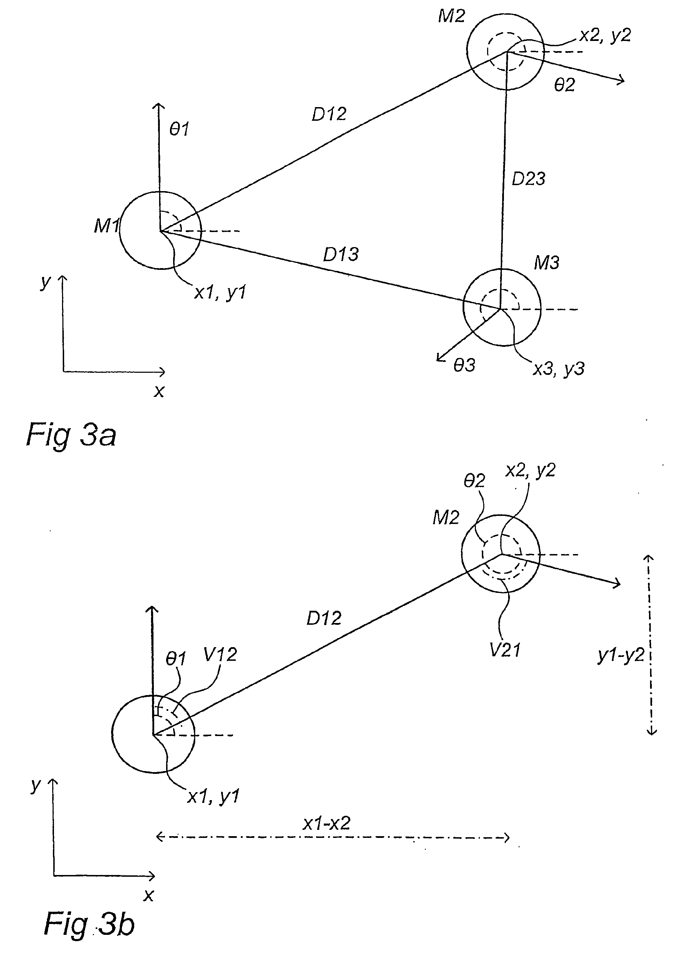

The direction will now, with reference to Fig. 3a, be directed to pairwise processing of minutiae points M1, M2, M3, which are assumed to be identified in an image of a fingerprint. The described method can be applied in enrolment, identification and verification. The described method uses only the location and orientation of the minutiae points relative to each other, but it will be appreciated that also other features, such as type, absolute location etc, can be used to supplement the described method.

Fig. 3a shows three minutiae points M1, M2, M3 which have been identified, for instance, in the image in Fig. 1. Each of the minutiae points is represented by a pair of coordinates x1, y1; x2, y2; x3, y3 and an angle $\theta1$, $\theta2$ and $\theta3$, respectively. The angles $\theta1$, $\theta2$, $\theta3$ are here calculated in relation to the x axis in the coordinate system of the image, as is indicated in Fig. 3a by means of dashed lines. Furthermore, Fig. 3a shows distance lines D12, D13 and D23 between the respective pairs of minutiae points.

Fig. 3b shows a pair of two minutiae points M1, M2 from Fig. 3a. In addition to pairs of coordinates x1, x2; y1, y2 and angles θ1, θ2, there are also indicated by a dash-dotted line angles V12 and V21, respectively, between the directional vectors of the minutiae points and a distance line D12 between the minutiae points M1, M2. It is further indicated by a dash-dotted line how the distance between the minutiae points in x direction and y direction, respectively, is calculated.

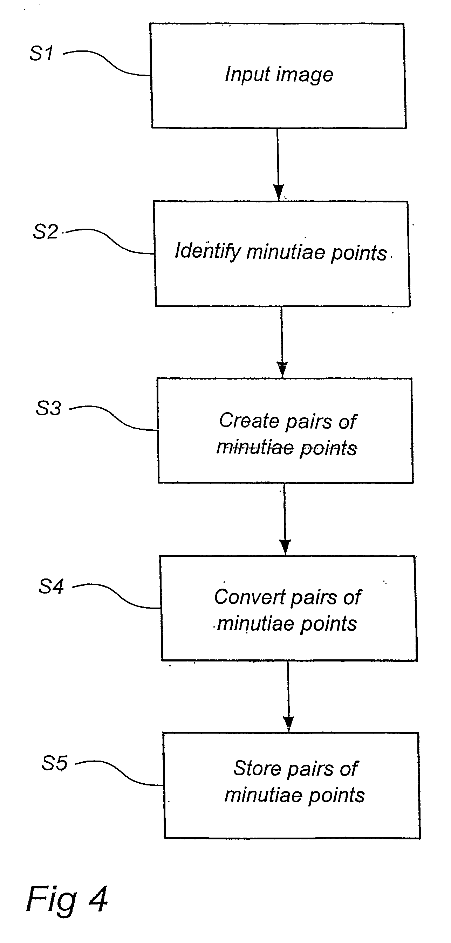

With reference to Fig. 4, a method of creating reference fingerprint data (template), i.e. an enrolment method, will now be described.

In a prior-art manner, a fingerprint in the form of an image is input and preprocessed in step S1. In step S2, minutiae points M1, M2, M3 from the image are identified and stored in the form of a list according to the Example in Table 1 above.

As described above with reference to Fig. 1 and Fig. 2, a list of points is created, which list for each minutiae point comprises at least one x coordinate, y coordinate and absolute angle relative to the coordinate system of the image. Table 2 is a list of the minutiae points shown in Fig. 3.

Table 2: Minutiae points from Fig. 3a

| Point | Direction | x coord | y coord |
|-------|-----------|---------|---------|
| M1    | θ1        | X1      | Y1      |
| M2    | θ2        | X2      | Y2      |
| M3    | θ3        | X3      | Y3      |

Based on the minutiae points in Fig. 3a, three different pairs of minutiae points can be created, as shown in Table 3, in step S3. Coordinates and orientation of the pairs of minutiae points shown in Table 3 are indicated relative to the coordinate system for the image of the fingerprint.

Table 3: Pairs of minutiae points from Fig. 3a

|       | 1st point | | | 2nd point | | |
|-------|-----------|---------|-----------|---------|---------|-----------|
| Pairs | x coord   | y coord | Direction | x coord | y coord | Direction |
| M12   | X1        | Y1      | θ1        | X2      | Y2      | θ1        |
| M13   | X1        | Y1      | θ1        | X3      | Y3      | θ3        |
| M23   | X2        | Y2      | θ2        | X3      | Y3      | θ3        |

In step S4, the pairs of minutiae points are converted so that each pair of minutiae points is described by means of a distance between the points included in the pair and angles between the directional vector of the respective minutiae points and a straight line between the minutiae points.

As indicated in Fig. 3b, the distance D12 between two points M1, M2 can be calculated by Pythagoras theorem according to equation 1.

$$D12 = \sqrt{(x1 - x2)^2 + (y1 - y2)^2} \qquad (1)$$

Then an angle $\varphi_{12}$ for a distance line between M1 and M2 can be determined by means of, for example, equation 2.

$$\tan \varphi_{12} = \frac{y1 - y2}{x1 - x2} \qquad (2)$$

As shown in Fig. 3b, the angle V12 of a first minutiae point M1 relative to the distance line between the minutiae points M1 and M2 can be determined by equation 3.

$$V12 = \theta1 - \varphi12 \hspace{4cm} (3)$$

The second minutiae point included in the pair is determined correspondingly and the pairs of minutiae points can be represented according to Table 4. The angles have been marked with a two-digit index, the first digit indicating at which minutiae point the angle lies and the second digit indicating the minutiae point in relation to which the angle is calculated.

Table 4: Converted pairs of minutiae points

| Pair | Distance | Angle at 1st point | Angle at 2nd point |
| --- | --- | --- | --- |
| M12 | D12 | V12 | V21 |
| M13 | D13 | V13 | V31 |
| M23 | D23 | V23 | V32 |

The representation of the angles can be sampled to a value which can be represented in a suitable manner. In the example described, the angles have been sampled to 3 bits, i.e. a number between 0 and 7, which gives a resolution of 45°. However, it will be appreciated that in a real application, a higher resolution may be convenient, the respective angles being represented by, for instance, 4, 5, 6, 8 16 or 32 bits.
A sampling of the angles in Table 4 may produce values as are evident from Table 5 below.

Table 5: Sampled angle values

| Pair | Distance | Angle at 1st point | Angle at 2nd point |
| --- | --- | --- | --- |
| M12 | D12 | 1 | 7 |
| M13 | D13 | 2 | 1 |
| M23 | D23 | 1 | 6 |

A two-dimensional storage structure, for example a matrix P, is then created, as will be evident from Table 6 below. In the matrix, there are arranged in step S5 the values of D12, D13 and D23, respectively, in cells that are indexed by the first V1 and second V2 angles, as will be shown in Table 6. The other cells in the matrix can be filled, for instance, with zeros or another desired value.

Table 6: Distance values introduced into the matrix P

| V1 \ V2 | 0 | 1 | 2 | 3 | 4 | 5 | 6 | 7 |
| --- | --- | --- | --- | --- | --- | --- | --- | --- |
| 0 | 0 | 0 | 0 | 0 | 0 | 0 | 0 | 0 |
| 1 | 0 | 0 | D13 | 0 | 0 | 0 | 0 | 0 |
| 0 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 0 |
| 6 | 0 | D23 | 0 | 0 | 0 | 0 | 0 | 0 |
| 7 | 0 | D12 | 0 | 0 | 0 | 0 | 0 | 0 |

According to one embodiment, sampling can take place in connection with step S5. Alternatively, sampling can take place previously, for instance in one of the steps S3 and S4.

If two pairs of minutiae points should receive the same index, i.e. be positioned in the same cell in the matrix P in Table 6, it is possible to select which one is to be positioned there. For example, it is possible to keep the pair of minutiae points that are closest to each other, i.e. that have the lowest value of D.

Thus, the matrix P is filled up until it contains all, or a predetermined amount of, pairs of minutiae points. The matrix P can in a prior-art manner be represented as a number sequence.

In enrolment of a fingerprint, an enrolment matrix $P_E$ is thus created, which can be used as a template. The enrolment matrix can be stored space-efficiently on, for example, a smart card.

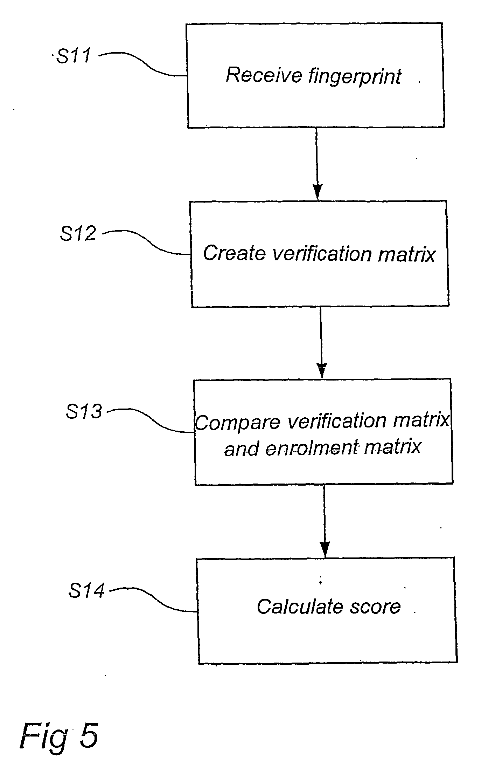

With reference to Fig. 5, a method for verification or identification will now be described. When a fingerprint is recorded in connection with verification or identification, a verification matrix or an identification matrix $P_V$ or $P_I$, respectively, can be created correspondingly. In the description below, only the case of verification will be described, for the sake of simplicity. It will be appreciated that the method in identification is analogous.

A fingerprint 1 is received in step S11 from, for example, a fingerprint reader (not shown). In step S12, the fingerprint is preprocessed in a manner corresponding to that described with reference to Fig. 4, whereby a verification matrix $P_V$ is created.

An enrolment matrix $P_E$ can be obtained from a data carrier, such as a smart card, or from a database comprising a plurality of enrolment matrices, as is the case in identification. The enrolment matrix $P_E$ can be determined according to the method described with reference to Fig. 4. Step S12 can be performed in the fingerprint reader, and the verification matrix is sent to the smart card for further processing.

In step S13, a comparison of the verification matrix and the enrolment matrix is effected. Such a comparison can be made position by position, an absolute difference being calculated for each position.

Based on the comparison in step S13, a score can be calculated in S14, which score represents how well the verification matrix $P_V$ and the enrolment matrix $P_E$ match each other. The score can suitably be scaled so that its value is compatible with the corresponding scores from other identification techniques.

According to another embodiment of the invention, the angles associated with the minutiae points from an image of a fingerprint can be represented relative to a common system of coordinates, and arranged in a data structure in a manner analogous to the above-described method. In matching, a data structure representing a verification matrix can be compared with a data structure representing an enrolment matrix, in the manner described above. If the match is worse than a given threshold value, the angles represented in the enrolment matrix can be increased or decreased by a given value, whereby a new verification matrix, containing the distance values which each are indexed by two angles, can be obtained, and the comparison is repeated once more.

The method can then be repeated until a predetermined number of rotations have been tested, or until a sufficiently good match is obtained.

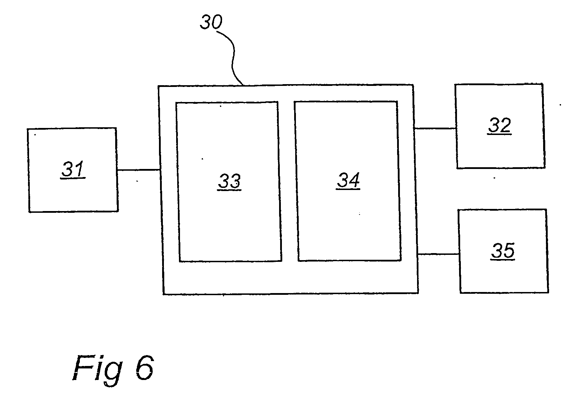

Fig. 6 shows a device 30 in which the method according to the invention can be carried out. The device comprises at least one data processing unit 33, such as a microprocessor or a digital signal processor. The device can be connected to, or integrated with, a reader 31 for fingerprints. Moreover the device may comprise a memory 34 for storing instructions, which, when executed, make the device carry out the method according to the invention. The device can also be connected to, or integrated with, a reader 32 for data carriers, from which reference data for a user can be obtained, or to a data storage unit 35, from which reference data from one or more users can be obtained.

As mentioned above, it is possible to supplement the above-described storage by storing, in addition to the distance between a pair of minutiae points, an indication of the type of each minutiae point or its absolute angle relative to the fingerprint.

Since the matrices $P_E$, $P_V$ in many cases may consist mainly (for instance above 50%) of zeros, these can be compressed in a prior-art manner so as to take up less storage space. Examples of suitable compressing methods can be Hoffmann coding and run length coding.

It is also possible to combine the above-described method with other verification or identification methods for the purpose of providing a more reliable identity check. For example, scores from different verification methods can be combined, such as in averaging etc.

It is also conceivable to use the above-described method as a screening method to quickly find one or more fingerprints that should be analysed in more detail. This can be particularly advantageous in identification based from a database containing a large number of templates.

It will be appreciated that the invention is not restricted to the embodiments described above and can be varied within the scopes of the appended claims. It will also be appreciated that the described embodiments can be combined.

## Claims

**1.** A method for creating a representation of a fingerprint (1), **characterised by** forming a set of unique pairs of minutiae points (M1-M8) identified in the fingerprint (1), each pair of minutiae points being represented by a distance between said minutiae points and by angles associated with the respective minutiae points included in the pair, and wherein said set of unique pairs of minutiae points is represented as a data structure comprising a matrix of distance values that is indexed based on said respective angles associated with said minutiae points included in the unique pair.

2. A method as claimed in claim 1, **characterised in that** said angles constitute coordinates in a coordinate system, wherein said distance is stored at the point indexed by said angles.

3. A method as claimed in claim 1 or 2, **characterised in that** said angles represent the orientation of the respective minutiae points.

4. A method as claimed in any one of the preceding claims, **characterised in that** said unique pair of minutiae points is only represented by said distance and said angles.

5. A method as claimed in any one of claims 1-3, **characterised in that** said pair is also represented by data indicating the type of the respective minutiae points.

6. A method as claimed in any one of the preceding claims, **characterised in that** said angles are represented relative to a straight line extending through both minutiae points included in the pair.

7. A method as claimed in any one of claims 1-4, **characterised in that** said angles are represented relative to a predetermined coordinate system.

8. A method as claimed in any one of the preceding claims, **characterised by** arranging in said data structure said distance indexed based on said angles associated with the respective minutiae points included in the pair.

9. A method as claimed in claim 8, **characterised in that** said data structure is two-dimensionally indexed, a first dimension being indexed based on a first angle, which is associated with a first minutiae point included in said pair of minutiae points, and a second dimension being indexed based on a second angle, which is associated with a second minutiae point included in said pair of minutiae points.

10. A method comprising checking a person's identity, comprising

   identifying in an electronic representation of a fingerprint first and second minutiae points, determining said distance between said first and second minutiae points, and determining first and second angles associated with said first and second minutiae points, **characterised in that** the method comprises all steps as claimed in any one of the preceding claims.

11. A method as claimed in claim 10 in combination with any one of claims 7-9, **characterised in that** said electronic representation of a fingerprint represents a current fingerprint, the method further comprising receiving an enrolment matrix, and comparing said enrolment matrix with said data structure.

12. A method as claimed in claim 11, **characterised by** comparing a predetermined value in said enrolment matrix with a predetermined value in said data structure.

13. A method as claimed in claim 12, **characterised by** creating a difference between said predetermined value in the enrolment matrix and said predetermined value in the data structure.

14. A method as claimed in any one of the preceding claims, **characterised in that** the method is performed on a smart card.

15. A method for creating reference data for checking a person's identity, comprising

   identifying in an electronic representation of a fingerprint first and second minutiae points, determining a distance between said first and second minutiae points, and determining first and second angles associated with said first and second minutiae points, **characterised in that**

the method comprises all steps as claimed in any one of claims 1-9.

16. A method as claimed in claim 15, **characterised by** storing said data structure on a portable data carrier.

17. A computer program product comprising instructions for execution in a data processing unit, **characterised in that** the instructions in execution make said data processing unit perform the method as claimed in claim 15 or 16.

18. A computer program product comprising instructions for execution in a data processing unit, **characterised in that** the instructions in execution make said data processing unit perform the method as claimed in any one of claims 1-14.

19. A computer program product as claimed in claim 18, **characterised in that** the instructions are executable on a smart card.

20. A device (30) for checking a person's identity, comprising a data processing unit (33), **characterised in that** said data processing unit (33) is arranged to create a set of unique pairs of minutiae points identified in the fingerprint, each unique pair of minutiae points being represented by a distance between said minutiae points and by angles associated with the respective minutiae points included in the pair, wherein said set of unique pairs of minutiae points is represented as a data structure comprising a matrix of distance values that is indexed based on said respective angles associated with said minutiae points included in the unique pair.

21. A device (30) according to claim 20, wherein said data processing unit (33) is further arranged to compare a representation of a current fingerprint with reference fingerprint data, said representation of a current fingerprint comprising a set of unique pairs of minutiae points identified in the current fingerprint, and said reference fingerprint data comprising a set of unique pairs of minutiae points identified in a reference fingerprint, each unique pair of minutiae points being represented by a distance between said minutiae points and by angles associated with the respective minutiae points included in the pair, and wherein said set of unique pairs of minutiae points is represented as said data structure comprising a matrix of distance values that is indexed based on said respective angles associated with said minutiae points included in the unique pair.

22. A device as claimed in claim 21, **characterised in that** the device comprises a smart card.

23. A method for using a device according to claim 20 for creating reference data for checking a person's identity.

**Patentansprüche**

1. Verfahren zur Erzeugung einer Darstellung eines Fingerabdrucks (1), **gekennzeichnet durch** die Ausbildung eines Satzes von eindeutigen Paaren an Minutien-Punkten (M1-M8), welche in dem Fingerabdruck (1) identifiziert wurden, wobei jedes Paar von Minutien-Punkten **durch** einen Abstand zwischen den Minutien-Punkten sowie **durch** Winkel dargestellt wird, die mit den entsprechenden Minutien-Punkten verknüpft sind, welche in dem Paar enthalten sind und wobei der Satz von eindeutigen Paaren an Minuten-Punkten als eine Datenstruktur dargestellt ist, welche eine Matrix mit Abstandswerten umfasst, die indiziert ist basierend auf den entsprechenden Winkeln, die mit den Minutien-Punkten verknüpft sind, welche in dem eindeutigen Paar enthalten sind.

2. Verfahren nach Anspruch 1, **dadurch gekennzeichnet, dass** die Winkel Koordinaten in einem Koordinatensystem bilden, wobei der Abstand bei dem Punkt gespeichert wird, der durch die Winkel indiziert ist.

3. Verfahren nach Anspruch 1 oder 2, **dadurch gekennzeichnet, dass** die Winkel die Orientierung der entsprechenden Minutien-Punkte darstellen.

4. Verfahren nach irgendeinem der vorausgehenden Ansprüche, **dadurch gekennzeichnet, dass** das eindeutige Paar an Minutien-Punkten nur durch den Abstand und die Winkel dargestellt wird.

5. Verfahren nach irgendeinem der Ansprüche 1-3, **dadurch gekennzeichnet, dass** das Paar auch durch Daten dargestellt wird, welche den Typ der entsprechenden Minutien-Punkte anzeigen.

6. Verfahren nach irgendeinem der vorausgehenden Ansprüche, **dadurch gekennzeichnet, dass** die Winkel relativ zu einer geraden Linie dargestellt werden, welche sich durch beide Minuten-Punkte erstreckt, die in dem Paar enthalten sind.

7. Verfahren nach irgendeinem der Ansprüche 1-4, **dadurch gekennzeichnet, dass** die Winkel relativ zu einem vorgegebenen Koordinatensystem dargestellt werden.

8. Verfahren nach irgendeinem der vorausgehenden Ansprüche, **gekennzeichnet durch das** Anordnen des Abstandes, der basierend auf den Winkeln indiziert ist, die mit den in dem Paar enthaltenen entsprechenden Minutien-Punkten verknüpft sind in der Datenstruktur.

9. Verfahren nach Anspruch 8, **dadurch gekennzeichnet, dass** die Datenstruktur zweidimensional indiziert ist, wobei eine erste Dimension indiziert ist basierend auf einem ersten der mit einem ersten Minutien-Punkt verknüpft ist, der in dem Paar an Minutien-Punkten enthalten ist, und
eine zweite Dimension indiziert ist basierend auf einem zweiten Winkel, der mit einem zweiten Minutien-Punkt verknüpft ist, der in dem Paar an Minutien-Punkten enthalten ist.

10. Verfahren, das die Überprüfung der Identität einer Person umfasst, welches eine Identifikation von ersten und zweiten Minutien-Punkten eines Fingerabdrucks in einer elektronischen Darstellung umfasst, und
welches den Abstand zwischen dem ersten und zweiten Minutien-Punkt bestimmt, und
welches den ersten und zweiten Winkel bestimmt, der mit dem ersten und zweiten Minutien-Punkt verknüpft ist, **dadurch gekennzeichnet, dass** das Verfahren alle Schritte umfasst, wie sie in irgendeinem der vorausgehenden Patentansprüche beansprucht werden.

11. Verfahren nach Anspruch 10 kombiniert mit irgendeinem der Ansprüche 7-9, **dadurch gekennzeichnet, dass** die elektronische Darstellung eines Fingerabdrucks einen aktuellen Fingerabdruck darstellt und wobei das Verfahren ferner den Empfang einer Registrierungsmatrix und das Verglichen der Registrierungsmatrix mit der Datenstruktur einschließt

12. Verfahren nach Anspruch 11, **gekennzeichnet durch** einen Vergleich eines vorgegebenen Wertes in der Registrierungsmatrix mit einem vorgegebenen Wert in der Datenstruktur.

13. Verfahren nach Anspruch 12, **gekennzeichnet durch** ein Erzeugen einer Differenz zwischen dem vorgegebenen Wert in der Registrierungsmatrix und dem vorgegebenen Wert in der Datenstruktur.

14. Verfahren nach irgendeinem der vorausgehenden Ansprüche, **dadurch gekennzeichnet, dass** das Verfahren auf einer Chipkarte durchgeführt wird,

15. Verfahren zum Erzeugen von Referenzdaten zur Überprüfung der Identität einer Person, das umfasst
eine Identifizierung von einem ersten und zweiten Mtnutien-Punkt eines Fingerabdrucks in einer elektronischen Darstellung,
eine Bestimmung des Abstandes zwischen dem ersten und zweiten Minutien-Punkt, und
eine Bestimmung des ersten und zweiten Winkels, der jeweils mit dem ersten und zweiten Minutien-Punkt verknüpft ist, **dadurch gekennzeichnet, dass** das Verfahren alle Schritte umfasst, wie sie in irgendeinem der Patentansprüche 1-9 beansprucht werden,

16. Verfahren nach Anspruch 15, **gekennzeichnet durch** eine Speicherung der Datenstruktur auf einem beweglichen Datenträger,

17. Computerprogramm-Produkt, das Anweisungen zur Ausführung in einer Datenverarbeitungseinheit umfasst, **dadurch gekennzeichnet, dass** die Anweisungen bei der Ausführung die Datenverarbeitungseinheit veranlassen das Verfahren nach Anspruch 15 oder 16 auszuführen.

18. Computerprogramm-Produkt, das Anweisungen zur Ausführung in einer Datenverarbeitungseinheit umfasst, **dadurch gekennzeichnet, dass** die Anweisungen bei der Ausführung die Datenverarbeitungseinheit veranlassen das Verfahren nach irgendeinem der Ansprüche 1-14 auszuführen.

19. Computerprogramm-Produkt nach Anspruch 18, **dadurch gekennzeichnet, dass** die Anweisungen auf einer Chipkarte ausführbar sind.

20. Vorrichtung (30) zur Überprüfung der Identität einer Person, welche eine Datenverarbeitungseinheit (33) umfasst, **dadurch gekennzeichnet, dass** die Datenverarbeitungseinheit (33) eingerichtet ist, um einen Satz von eindeutigen Paaren an Minutien-Punkten zu erzeugen, welche in dem Fingerabdruck identifiziert wurden, wobei jedes Paar von Minutien-Punkten durch einen Abstand zwischen den Minutien-Punkten sowie durch Winkel dargestellt wird, die mit den entsprechenden Minutien-Punkten verknüpft sind, welche in dem Paar enthalten sind und wobei der Satz an eindeutigen Paaren an Minutien-Punkten als eine Datenstruktur dargestellt, ist, welche eine Matrix mit Abstandswerten umfasst, die indiziert ist basierend auf den entsprechenden Winkeln, die mit den Minutien-Punkten verknüpft sind, welche in dem eindeutigen Paar enthalten sind.

21. Vorrichtung (30) nach Anspruch 20, wobei die Datenverarbeitungseinheit (33) ferner angeordnet ist, um eine Darstellung eines aktuellen Fingerabdrucks mit Referenz-Fingerabdruckdaten zu vergleichen, wobei die Darstellung eines aktuellen Fingerabdrucks einen Satz von eindeutigen Paaren an Minutien-Punkten umfasst, die in dem aktuellen Fingerabdruck identifiziert wurden und die Referenz-Fingerabdruckdaten einen Satz von eindeutigen Paaren an Minutien-Punkten umfassen, die in einem Referenz-Fingerabdruck identifiziert wurden, wobei jedes eindeutige Paar von Minutien-Punkten dargestellt wird durch einen Abstand zwischen den Minutien-Punkten sowie durch Winkel, weiche mit den jeweiligen Minutien-Punkten verknüpft sind weiche in dem Paar enthalten sind und wobei der Satz von eindeutigen Paaren an Minutien-Punkten dargestellt wird als die Datenstruktur, welche eine Matrix von Abstandswerten umfasst, die indiziert ist basierend auf den entsprechenden Winkeln, die mit den Minutien- Punkten verknüpft sind, welche in dem eindeutigen Paar enthalten sind.

22. Vorrichtung nach Anspruch 21, **dadurch gekennzeichnet dass** die Vorrichtung eine Chipkarte umfasst.

23. Verfahren zur Verwendung einer Vorrichtung nach Anspruch 20 zur Erzeugung von Referenzdaten zur Überprüfung der Identität einer Person.

**Revendications**

1. Procédé de création d'une représentation d'une empreinte digitale (1), **caractérisé par** la formation d'un ensemble de paires uniques de points caractéristiques (M1-M8) identifiés dans l'empreinte digitale (1), chaque paire de points caractéristiques étant représentée par une distance entre lesdits points caractéristiques et par des angles associés aux points caractéristiques respectifs compris dans la paire, et dans lequel ledit ensemble de paires uniques de points caractéristiques est représenté sous la forme d'une structure de données comprenant une matrice de valeurs de distance qui est indexée en se basant sur lesdits angles respectifs associés audits points caractéristiques compris dans la paire unique.

2. Procédé selon la revendication 1, **caractérisé en ce que** lesdits angles constituent des coordonnées dans un système de coordonnées, dans lequel ladite distance est stockée au point indexé par lesdits angles.

3. Procédé selon la revendication 1 ou 2, **caractérisé en ce que** lesdits angles représentent l'orientation des points caractéristiques respectifs.

4. Procédé selon l'une quelconque des revendications précédentes, **caractérisé en ce que** ladite paire unique de points caractéristiques est uniquement représentée par ladite distance et lesdits angles.

5. Procédé selon l'une quelconque des revendications 1-3, **caractérisé en ce que** ladite paire est aussi représentée par des données indiquant le type des points caractéristiques respectifs.

6. Procédé selon l'une quelconque des revendications précédentes, **caractérisé en ce que** lesdits angles sont représentés par rapport à une ligne droite s'étendant à travers les deux points caractéristiques compris dans la paire.

7. Procédé selon l'une quelconque des revendications 1-4,
**caractérisé en ce que** lesdits angles sont représentés par rapport à un système de coordonnées prédéterminé.

8. Procédé selon l'une quelconque des revendications précédentes, **caractérisé par** l'agencement dans ladite structure de données de ladite distance indexée en se basant sur lesdits angles associés aux points caractéristiques respectifs compris dans la paire,

**9.** Procédé selon la revendication 8, **caractérisé en ce que** la structure de données est indexée en deux dimensions, une première dimension étant indexée en se basant sur un premier angle, qui est associé à un premier point caractéristique compris dans ladite paire de points caractéristiques, et
une deuxième dimension étant indexée en se basant sur un second angle, qui est associé à un second point caractéristique compris dans ladite paire de points caractéristiques.

**10.** Procédé comprenant la vérification de l'identité d'une personne, comprenant l'identification, dans une représentation électronique d'une empreinte digitale, des premier et second points caractéristiques,
la détermination de ladite distance entre lesdits premier et second points caractéristiques, et
la détermination du premier et du second angles associés audits premier et second points caractéristiques,
**caractérisé en ce que** le procédé comprend toutes les étapes selon l'une quelconque des revendications précédentes.

**11.** Procédé selon la revendication 10 en combinaison avec l'une quelconque des revendications 7-9, **caractérisé en ce que** ladite représentation électronique d'une empreinte digitale représente une empreinte digitale actuelle, le procédé comprenant en outre la réception d'une matrice d'enrôlement, et la comparaison de ladite matrice d'enrôlement avec ladite structure de données.

**12.** Procédé selon la revendication 11, **caractérisé par** la comparaison d'une valeur prédéterminée dans ladite matrice d'enrôlement avec une valeur prédéterminée dans ladite structure de données.

**13.** Procédé selon la revendication 12, **caractérisé par** la création d'une différence entre ladite valeur prédéterminée dans la matrice d'enrôlement et ladite valeur prédéterminée dans la structure de données.

**14.** Procédé selon l'une quelconque des revendications précédentes, **caractérisé en ce que** le procédé est exécuté sur une carte à puce.

**15.** Procédé de création de données de référence destinées à la vérification de identité d'une personne, comprenant l'identification, dans une représentation électronique d'une empreinte digitale, des premier et second points caractéristiques,
la détermination d'une distance entre ledit premier et ledit second points caractéristiques, et
la détermination du premier et du second angles associés avec lesdits premier et second points caractéristiques,
**caractérisé en ce que**
le procédé comprend toutes les étapes selon l'une quelconque des revendications 1-9.

**16.** Procédé selon la revendication 15, **caractérisé par** le stockage de ladite structure de données sur un support de données portable.

**17.** Produit de programme informatique comprenant des instructions destinées à être exécutées dans une unité de traitement de données,
**caractérisé en ce que** les instructions lors de leur exécution font exécuter à ladite unité de traitement de données le procédé selon la revendication 15 ou 16.

**18.** Produit de programme informatique comprenant des instructions destinées à être exécutées dans une unité de traitement de données,
**caractérisé en ce que** les instructions lors de leur exécution font exécuter à ladite unité de traitement de données le procédé selon l'une quelconque des revendications 1-14.

**19.** Produit de programme informatique selon la revendication 18, **caractérisé en ce que** les instructions peuvent être exécutées sur une carte à puce.

**20.** Dispositif (30) de vérification de l'identité d'une personne, comprenant une unité de traitement de données (33),
**caractérisé en ce que** ladite unité de traitement de données (33) est agencée pour créer un ensemble de paires uniques de points caractéristiques identifiés dans l'empreinte digitale, chaque paire de points caractéristiques étant représentée par une distance entre lesdits points caractéristiques et par des angles associés aux points caractéristiques respectifs compris dans la paire, dans lequel ledit ensemble de paires uniques de points caractéristiques est représenté sous la forme d'une structure de données comprenant une matrice de valeurs de distance qui est indexée en se basant sur lesdits angles respectifs associés audits points caractéristiques compris dans la paire unique.

21. Dispositif (30) selon la revendication 20, dans lequel ladite unité de traitement de données (33) est en outre agencée pour
comparer une représentation d'une empreinte digitale actuelle avec des données d'empreinte digitale de référence, ladite représentation d'une empreinte digitale actuelle comprenant un ensemble de paires uniques de points caractéristiques identifiés dans l'empreinte digitale actuelle, et lesdites données d'empreinte digitale de référence comprenant un ensemble de paires uniques de points caractéristiques identifiés dans une empreinte digitale de référence, chaque paire unique de points caractéristiques étant représentée par une distance entre lesdits points caractéristiques et par des angles associés aux points caractéristiques respectifs compris dans la paire, et dans lequel ledit ensemble de paires uniques de points caractéristiques est représenté sous la forme de ladite structure de données comprenant une matrice de valeurs de distance qui est indexée en se basant sur lesdits angles respectifs associés audits points caractéristiques compris dans la paire unique.

22. Dispositif selon la revendication 21, **caractérisé en ce que** le dispositif comprend une carte à puce.

23. Procédé d'utilisation d'un dispositif selon la revendication 20 destiné à la création de données de référence pour verger l'identité d'une personne.

*Fig 1*

*Fig 2*

*Fig 3a*

*Fig 3b*

S1 — Input image

S2 — Identify minutiae points

S3 — Create pairs of minutiae points

S4 — Convert pairs of minutiae points

S5 — Store pairs of minutiae points

*Fig 4*

S11 — Receive fingerprint

S12 — Create verification matrix

S13 — Compare verification matrix and enrolment matrix

S14 — Calculate score

Fig 5

30

31

33 34

32

35

Fig 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4135147 A

**Non-patent literature cited in the description**

- **XUDONG JIANG et al.** Fingerprint Minutiae Matching Based on the Local and Global Structures. *Proc. Intl Conf. on Pattern Recognition,* 2000, 1038-1041

- **ROBERT S. GERMAIN et al.** Fingerprint Matching Using Transformation Parameter Clustering. *IEEE Comutational Science and Engineering,* 1997, 42-49